# EUROPÄISCHE PATENTANMELDUNG

(11) **EP 1 213 182 A2**
(43) Veröffentlichungstag der Anmeldung: **12.06.2002**
(21) Anmeldenummer: 01125934.8
(22) Anmeldetag: 31.10.2001
(51) Int. Cl.: B60Q 1/52

(54) **Einrichtung zur bildlichen Erfassung des Strassenverkehrs**

(30) Priorität: 29.11.2000 DE 20020245 U
(71) Anmelder: A.V.M.- American Venture Marketing GmbH, 63263 Neu-Isenburg (DE)
(72) Erfinder: Lindenau, Gert, 63263 Neu-Isenburg (DE)
(74) Vertreter: Schubert, Siegmar, Dipl.-Ing.

(57) **Zusammenfassung**

In einer Einrichtung zur bildlichen Erfassung des Straßenverkehrs mit einer an oder in einem Kraftfahrzeug angebrachten Videokamera (2), ist deren Bildfeld in Fahrrichtung des Kraftfahrzeugs (1) erfassend ausgerichtet. Übertragungsmittel stehen einerseits mit der Videokamera (2) und andererseits mit einem Bildwiedergabegerät (5) in videosignalübertragender Verbindung. Um den Fahrer eines überholenden Fahrzeugs erweiterte Informationen über den vor ihm liegenden Straßenbereich zu verschaffen, ist das Bildwiedergabegerät (5) in einem hinteren Bereich des Kraftfahrzeugs (1) so ausgerichtet angebracht, daß für dem Kraftfahrzeug nachfolgende Verkehrsteilnehmer ein von dem Bildwiedergabegerät (5) erzeugtes Bild direkt beobachtbar ist.

## Beschreibung

Die Erfindung betrifft eine Einrichtung zur bildlichen Erfassung des Straßenverkehrs nach dem Oberbegriff des Anspruchs 1.

Bei derartigen aus der Praxis bekannten Einrichtungen ist das Bildwiedergabegerät im Innern des Kraftfahrzeugs im Armaturenbrettbereich so angeordnet, daß es insbesondere von dem Beifahrer beobachtet werden kann. Zu dieser Einrichtung kann weiterhin ein Bildaufzeichnungsgerät zur Dokumentation gehören. Die Einrichtung dient dazu, daß Polizeikräfte den Straßenverkehr zusätzlich beobachten und dokumentieren können, um Verkehrsverstöße zu ahnden. Eine unmittelbare Erhöhung der Verkehrssicherheit ist damit nicht gegeben.

Verkehrsgefährdend sind häufig Überholvorgänge, da der vor dem Überholer liegende Straßenbereich wegen des voranfahrenden, zu überholenden Fahrzeugs nicht genügend eingesehen werden kann, weil durch das zu überholende Fahrzeug teilweise verdeckt. Dieser Mangel wird zwar gelegentlich durch den Fahrer des zu überholenden Fahrzeugs dadurch gemindert, daß dieser bei freier Überholstrecke dem nachfahrenden Fahrzeug ein Zeichen gibt. Diese zusätzliche Aktivität des Fahrers des voranfahrenden Fahrzeugs kann jedoch in der Regel nicht erwartet werden und kann hinsichtlich der Haftung des Fahrers, der ein Zeichen gibt, problematisch sein.

Der Erfindung liegt daher die Aufgabe zugrunde, eine Einrichtung zu schaffen, mit der der Fahrer eines überholenden Fahrzeugs erweiterte Informationen über den vor ihm liegenden Straßenbereich erhält, ohne eine diesbezügliche Aktivität des Fahrers des vorangehenden Fahrzeugs zu erfordern.

Diese Aufgabe für eine Einrichtung der eingangs genannten Gattung, nämlich zur bildlichen Erfassung des Straßenverkehrs mit einer an oder in einem Kraftfahrzeug, insbesondere Lkw angebrachten Videokamera, die ein Bildfeld in Fahrrichtung des Kraftfahrzeugs erfassend ausgerichtet ist, und mit Übertragungsmitteln, die einerseits mit der Videokamera und andererseits mit einem Bildwiedergabegerät in videosignalübertragender Verbindung stehen, dadurch gelöst, daß das Bildwiedergabegerät in einem hinteren Bereich des Kraftfahrzeugs so ausgerichtet angebracht ist, daß ein von dem Bildwiedergabegerät erzeugtes Bild von dem dem Kraftfahrzeug nachfolgenden Verkehrsteilnehmer direkt beobachtet werden kann.

Mit dieser Einrichtung wird ein von der Videokamera des zu überholenden Fahrzeugs erfaßter Straßenbereich, der dem zu überholenden Fahrzeug vorausliegt, selbsttätig erfaßt und auf dem Bildwiedergabegerät dargestellt, welches von dem Kraftfahrzeugführer des nachfolgenden Fahrzeugs ohne weiteres beobachtet werden kann, damit dieser entscheiden kann, ob er aufgrund der Verkehrssituation einen Überholvorgang einleitet oder nicht. Daraus ergibt sich mit technisch zuverlässigen Mitteln eine zusätzliche Informationsmöglichkeit des Verkehrsteilnehmers, der dem mit der Einrichtung ausgestatteten Kraftfahrzeug folgt, und dieses gegebenenfalls zu überholen wünscht. Letztlich können damit Überholvorgänge sicherer gestaltet werden und Überholunfälle vermieden werden, ohne hierzu eine besondere Gestaltung der Fahrstrecke oder stationäre Warnvorrichtungen zu erfordern.

Nach Anspruch 2 kann die Videokamera der Einrichtung vorne in einem Innenraum des Kraftfahrzeugs angeordnet sein, insbesondere gemäß Anspruch 3 auf dem Armaturenbrett angebracht sein.

Es ist aber auch möglich, die Videokamera außerhalb des Innenraumes, insbesondere gemäß Anspruch 4, unter einer vorderen Stoßstange des Kraftfahrzeugs anzuordnen. Insbesondere im letzteren Fall ist die Videokamera sehr zweckmäßig gemäß Anspruch 10 in einem Gehäuse unterzubringen, welches eine durchsichtige Scheibe aufweist, durch welche die Videokamera den Straßenbereich erfaßt. Die Scheibe kann gemäß Anspruch 11 mit einem Scheibenwischer und/oder einer Scheibenwaschanlage gesäubert werden, der beziehungsweise die an dem Gehäuse gemäß Anspruch 11 montiert ist.

Wesentlich ist, daß das Bildwiedergabegerät für Kraftfahrzeugführer nachfolgender Fahrzeuge so angeordnet ist und genügend groß ist, daß auf dem Bildschirm des Bildwiedergabegeräts der von der Videokamera erfaßte Straßenbereich gut beobachtet werden kann.

Hierzu kann das Bildwiedergabegerät gemäß Anspruch 5 hinten über einem Aufbau des Kraftfahrzeugs, welches die Einrichtung trägt, insbesondere eines Lkw, angebracht sein. Bei dieser Anordnung ist die Größe des Bildwiedergabegeräts und damit des Bildschirms durch den Aufbau nicht beschränkt, der regulär voll genutzt werden kann.

Es ist aber auch möglich, ohne Beeinträchtigung des Nutzraums des Aufbaus das Bildwiedergabegerät gemäß Anspruch 6 hinten unter dem Aufbau des Kraftfahrzeugs, insbesondere eines Lkw, unter dessen Ladekante anzuordnen.

Besonders bevorzugt ist eine Anordnung des Bildwiedergabegeräts in einer Hecktür des Fahrzeugs nach Anspruch 13, so daß sie seitlich nach oben oder unten nicht hervorsteht. In der Hecktür ist das Bildwiedergabegerät gut beobachtbar und stellt keinen widerstandserhöhenden oder Verkehrsteilnehmer gefährdenden Zusatz dar.

Besonders im letzten Fall ist das Bildwiedergabegerät zweckmäßig als Flachbildmonitor ausgebildet, der ein im Verhältnis zu dem Volumen des Geräts großes Bild aufweist.

Das Übertragungsmittel zur Übertragung des Videosignals von der Videokamera zu dem Wiedergabegerät kann in einem einfachen Fall eine Videosignalleitung sein, die in beziehungsweise an dem Fahrzeug verlegt ist.

Die Installation einer solchen Leitung ist aber entbehrlich, wenn gemäß Anspruch 8 die Videokamera mit einem Funksender in videosignalübertragender Verbindung steht und das Bildwiedergabegerät mit einem Funkempfänger videosignalübertragend verbunden ist, wobei die Videosignalübertragung drahtlos zwischen Funksender und Funkempfänger erfolgt.

Gemäß Anspruch 9 kann die Übertragung unter Einschaltung eines Satellitentransponders auch bei einer höheren Übertragungsfrequenz im Gigahertz-Bereich durchgeführt werden. Das Gehäuse, in dem insbesondere das verhältnismäßig große Bildwiedergabegerät untergebracht ist, weist gemäß Anspruch 12 zweckmäßig wenigstens eine den Fahrwiderstand mindernde Wölbung insbesondere auf der in Fahrrichtung des Kraftfahrzeugs weisenden Seite auf, um einerseits die Montierung des Gehäuses durch den Fahrtwind nicht zu stark zu belasten und andererseits die Fahrleistung des Kraftfahrzeugs möglichst nicht zu vermindern.

Ausführungsbeispiele der Erfindung werden im folgenden anhand einer Zeichnung mit vier Figuren erläutert, woraus sich weitere Merkmale und Vorteile ergeben können.

Es zeigt:
- Figur 1: einen Lkw in einer Seitenansicht mit der Videokamera, die als Kleinkamera ausgebildet ist, im Innenraum hinter der Windschutzscheibe und mit dem Bildwiedergabegerät hinten über dem Aufbau,
- Figur 2: eine Rückansicht auf das Fahrzeug gemäß Figur 1,
- Figur 3: einen Lkw in einer Seitenansicht mit einer anderen Anordnung der Videokamera, nämlich in einem Gehäuse unter der vorderen Stoßstange, sowie des Bildwiedergabegeräts hinten unter dem Aufbau und,
- Figur 4: eine Ansicht auf die Vorderseite des Lkw gemäß Figur 3.

In sämtlichen Figuren sind übereinstimmende Bestandteile mit gleichen Bezugszeichen versehen.

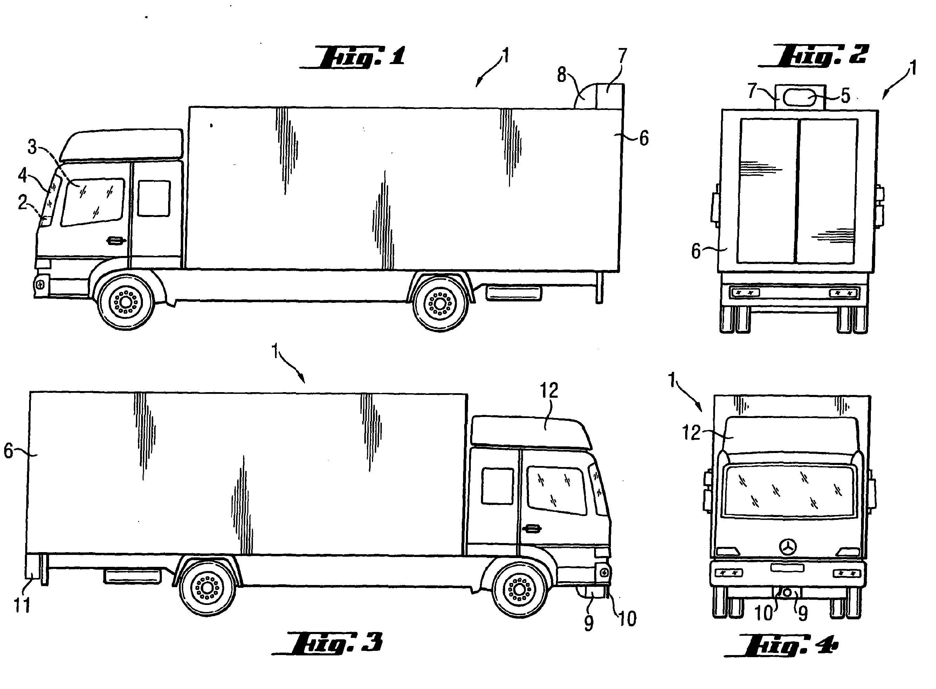

In den Figuren ist mit 1 allgemein ein Lkw bezeichnet. In der Ausführungsform gemäß den Figuren 1 und 2 ist eine Videokamera 2 in einem Innenraum 3 des Fahrerhauses, und zwar hinter dessen Windschutzscheibe 4 angeordnet. Die Videokamera 2 ist dabei so ausgerichtet, daß sie einen Straßenbereich bzw. Bildbereich erfaßt, der einen Fahrzeugführer eines dem Lkw 1 folgenden Fahrzeugs interessieren kann. Die von der Videokamera 2 generierten Videosignale werden zu einem Wiedergabegerät 5 übertragen, welches an dem hinteren Abschnitt des Fahrzeuges über dessen Aufbau 6 in einem Gehäuse 7 angebracht ist. Das Gehäuse weist eine den Fahrwiderstand mindernde Wölbung 8 auf, die auf der in Fahrrichtung liegenden Seite des Gehäuses 7 aus dem Gehäuse ausgeformt ist, beziehungsweise als zusätzliche Verkleidung an dem Gehäuse angebracht ist.

An dem Lkw 1 sind in der Ausführungsform der Einrichtung gemäß den Figuren 3 und 4 die Videokamera und das Wiedergabegerät anders angeordnet, und zwar ist die Videokamera in einem Gehäuse 9 vorne unter der Stoßstange des Lkw montiert. Ein Wischer 10 ist an der Vorderseite des Gehäuses, wo eine durchsichtige Scheibe, durch die die Videokamera einen Straßenbereich erfaßt, angeordnet. Durch nicht dargestellte Videoübertragungsmittel wird das von der Videokamera in dem Gehäuse 9 generierte Videobild zu einem Wiedergabegerät übertragen, welches in einem Gehäuse 11 hinten unter dem Aufbau 6 des Lkw angeordnet ist.

Die Videokamera kann statt unter der vorderen Stoßstange wie in Figuren 3 und 4 auch besonders zweckmäßig in einem stromlinienförmig gewölbten Abteil 12 über dem Fahrerhaus untergebracht sein, wo sie einen Straßenbereich übersichtlich erfaßt, und gegen Verschmutzung weitgehend geschützt ist.

## Patentansprüche

1. Einrichtung zur bildlichen Erfassung des Straßenverkehrs mit einer an oder in einem Kraftfahrzeug, insbesondere Lkw, angebrachten Videokamera (2), die ein Bildfeld in Fahrrichtung des Kraftfahrzeugs (1) erfassend ausgerichtet ist, und mit Übertragungsmitteln, die einerseits mit der Videokamera (2) und andererseits mit einem Bildwiedergabegerät (5) in videosignalübertragender Verbindung stehen,
**dadurch gekennzeichnet,**
**daß** das Bildwiedergabegerät (5) in einem hinteren Bereich des Kraftfahrzeugs (1) so ausgerichtet angebracht ist, daß für dem Kraftfahrzeug nachfolgende Verkehrsteilnehmer ein von dem Bildwiedergabegerät (5) erzeugtes Bild direkt beobachtbar ist.

2. Einrichtung nach Anspruch 1,
**dadurch gekennzeichnet,**
**daß** die Videokamera (2) vorne in einem Innenraum des Kraftfahrzeugs (1) angeordnet ist.

3. Einrichtung nach Anspruch 2
**dadurch gekennzeichnet,**
**daß** die Videokamera (2) auf dem Armaturenbrett angebracht ist.

4. Einrichtung nach Anspruch 2,
**dadurch gekennzeichnet,**
**daß** die Videokamera in einem Gehäuse unter einer vorderen Stoßstange des Kraftfahrzeugs angeordnet ist.

5. Einrichtung nach Anspruch 1, gegebenenfalls in Verbindung mit einem der Ansprüche 2 bis 4,
**dadurch gekennzeichnet,**
**daß** das Bildwiedergabegerät (5) hinten über einem Aufbau (6) des Kraftfahrzeugs (1) angebracht ist.

6. Einrichtung nach Anspruch 1, gegebenenfalls in Verbindung mit einem der Ansprüche 2 bis 4,
**dadurch gekennzeichnet,**
**daß** das Bildwiedergabegerät (5) hinten unter dem Aufbau (6) des Kraftfahrzeugs (1), insbesondere der Ladekante eines Lkw, angeordnet ist.

7. Einrichtung nach Anspruch 1 und gegebenenfalls wenigstens einem der Ansprüche 1 bis 6,
**dadurch gekennzeichnet,**
**daß** die Übertragungsmittel eine Videosignalleitung umfassen.

8. Einrichtung nach Anspruch 1 und gegebenenfalls wenigstens einem der Ansprüche 2 bis 6,
**dadurch gekennzeichnet,**
**daß** die Übertragungsmittel einen mit der Videokamera verbundenen Funksender und einen Funkempfänger, an den das Bildwiedergabegerät angeschlossen ist, umfassen.

9. Einrichtung nach Anspruch 8,
**dadurch gekennzeichnet,**
**daß** die Übertragungsmittel Funkübertragungsstrecken zwischen dem Sender und einem Satellitentransponder beziehungsweise dem Satellitentransponder und dem Empfänger einschließen.

10. Einrichtung nach Anspruch 1 und gegebenenfalls einem der Ansprüche 2 bis 9,
**dadurch gekennzeichnet,**
**daß** die Videokamera und/oder das Bildwiedergabegerät (5) in je einem Gehäuse (7, 9, 11) untergebracht ist, welches eine durchsichtige Scheibe aufweist, auf welche die Videokamera beziehungsweise das Bildwiedergabegerät (5) innen gerichtet ist.

11. Einrichtung nach Anspruch 10,
**dadurch gekennzeichnet,**
**daß** an dem Gehäuse (7, 9, 11) ein Scheibenwischer (10)/eine Scheibenwaschanlage angebracht ist, mit der beziehungsweise dem die Scheibe außen säuberbar ist.

12. Einrichtung nach Anspruch 10 und gegebenenfalls Anspruch 11,
**dadurch gekennzeichnet,**
**daß** das Gehäuse (7, 9, 11) wenigstens eine den Fahrwiderstand mindernde Wölbung (8) aufweist.

13. Einrichtung nach wenigstens einem der Ansprüche 1 bis 4, 7 bis 12,
**dadurch gekennzeichnet,**
**daß** das Bildungswiedergabegerät in einer Hecktür des Kraftfahrzeugs seitlich nicht vorstehend angeordnet ist.

14. Einrichtung nach einem der vorangehenden Ansprüche, insbesondere nach Anspruch 13,
**dadurch gekennzeichnet,**
**daß** das Bildschirmwiedergabegerät ein Flachbildmonitor ist.
